# EUROPEAN PATENT SPECIFICATION

(11) **EP 2 410 158 B1**
(45) Date of publication and mention of the grant of the patent: **04.05.2016**
(21) Application number: 10753585.8
(22) Date of filing: 18.03.2010
(51) Int. Cl.: F02D 41/06, F02D 17/00, F02D 29/02

(54) **AUTOMATIC START-STOP CONTROL DEVICE FOR INTERNAL COMBUSTION ENGINE**
AUTOMATISCHE START/STOPP-STEUERVORRICHTUNG FÜR EINEN VERBRENNUNGSMOTOR
DISPOSITIF DE COMMANDE AUTOMATIQUE DE DÉMARRAGE ARRÊT POUR MOTEUR À COMBUSTION INTERNE

(30) Priority: 19.03.2009 JP 2009068599
(43) Date of publication of application: 25.01.2012
(73) Proprietor: TOYOTA JIDOSHA KABUSHIKI KAISHA, Toyota-shi, Aichi-ken, 471-8571 (JP)
(72) Inventor: YOSHIHARA, Masatomo, Toyota-shi, Aichi-ken,471- 8571 (JP); OKAMURA, Koji, Toyota-shi, Aichi-ken,471- 8571 (JP); MASUDA, Satoshi, Kariya-shi Aichi 448-8661 (JP)
(74) Representative: Kuhnen & Wacker
(86) International application number: PCT/JP2010/054707
(87) International publication number: WO 2010/107094

(56) References cited:
- EP-A2- 1 992 815
- DE-A1- 10 301 191
- JP-A- S6 065 249
- JP-A- 60 065 249
- JP-A- 2008 014 248
- JP-A- 2008 014 248
- JP-A- 2008 267 297

## Description

### Technical Field

The present invention relates to an automatic stop and start control apparatus of an internal combustion engine which is provided with a function of restarting an internal combustion engine immediately when a restarting demand has been generated during dropping of a rotation speed of the internal combustion engine due to fuel injection stop performed by automatic stop control (idling stop control).

### Background Art

In recent years, vehicle equipped with an automatic stop and start control system of an engine (so-called "idling stop control system") have increased in order to achieve fuel saving, emission reduction, or the like. A conventional ordinary idling stop control system is configured such that, when a driver has stopped a vehicle, an engine is automatically stopped by performing stop of fuel injection (fuel cutoff), and thereafter when the driver has conducted an operation for starting the vehicle (a brake releasing operation, a accelerator pedal stepping operation, or the like), cranking of the engine is performed to restart the engine by automatically feeding power to a starter or a motor which also serves as a starter. In hybrid type electric vehicles, since there are ones of a type configured such that an engine is restarted by using a motor for vehicle driving as a starter, "a starter or a motor which also serves as a starter" is simply described as "a starter", so that the explanation is simplified.

In such an idling stop control system, a restart demand may be generated during dropping of a rotation speed of an engine due to fuel cutoff immediately after an automatic stop demand generation, but in such a case, when cranking of the engine is performed to restart the engine by feeding power to the starter after complete stop of engine rotation, it takes time from the automatic stop demand generation up to restart completion, which causes the driver to feel delay (dullness) of restart.

As described in Patent Document 1 (JPA-2005-1468775), therefore, in an idling stop control system equipped with a starter of a permanently engaged type where a pinion of the starter always meshes with a ring gear of an engine side (also called "permanently engaged starter"), there is one of type where, when a restart demand is generated in a period of dropping of an engine rotation speed due to fuel cutoff, the engine is restarted by feeding power to the starter before stop of engine rotation.

In this configuration, however, since the number of times of starter start increases inevitably, there is a concern about durability reduction of the starter.

As described in Patent Document 2 (JPA-2008-267297), therefore, there is one of type where, when a restart demand is generated during dropping of an engine rotation speed due to fuel cutoff caused by idling stop control, if the engine rotation speed still stays in a rotation speed region where starterless starting is possible (a rotation speed region where restart can be performed by only fuel injection), "starterless starting" which restarts the engine by only fuel injection without using a starter is performed.

### Prior Art Document

### Patent Document

Patent Document 1: JPA-2005-146875
Patent Document 2: JPA-2008-267297

### Summary of the Invention

### Problem to be solved by the Invention

A recent intake port injection type engine with advanced electronic control is configured such that synchronous injection which injects fuel in synchronism with an intake stroke of each cylinder is performed during normal operation and asynchronous injection which is not synchronous with a crank angle (intake stroke) is performed in order to prevent an air-fuel ratio from transitioning a lean side due to delay of fuel supply into the cylinder at a rapid acceleration time.

Pulse signals are outputted from a crank angle sensor and a cam angle sensor in synchronism with the rotation of the engine even during dropping of the engine rotation speed due to fuel cutoff of the above-described idling stop control like during the ordinary operation, and detection of the crank angle and a cylinder discrimination (discrimination of a cylinder put in the intake stroke) are performed, so that synchronous injection can be made possible. Therefore, the conventional system is configured such that, when a restart demand is generated during fuel cutoff/engine rotation dropping of the idling stop control, fuel injection is resumed with "synchronous injection" from the beginning to restart the engine, so that the engine is restarted by injecting fuel in synchronism with the intake stroke of each cylinder.

However, when a restart demand is generated, fuel injection is resumed with "synchronous injection" from the beginning to restart the engine like the conventional system, it takes time from generation of the restart demand up to generation of the first combustion (first explosion), there is such a possibility that the engine rotation speed drops to a rotation speed lower limit value where starterless starting is possible or less during that time to fail in the starterless starting.

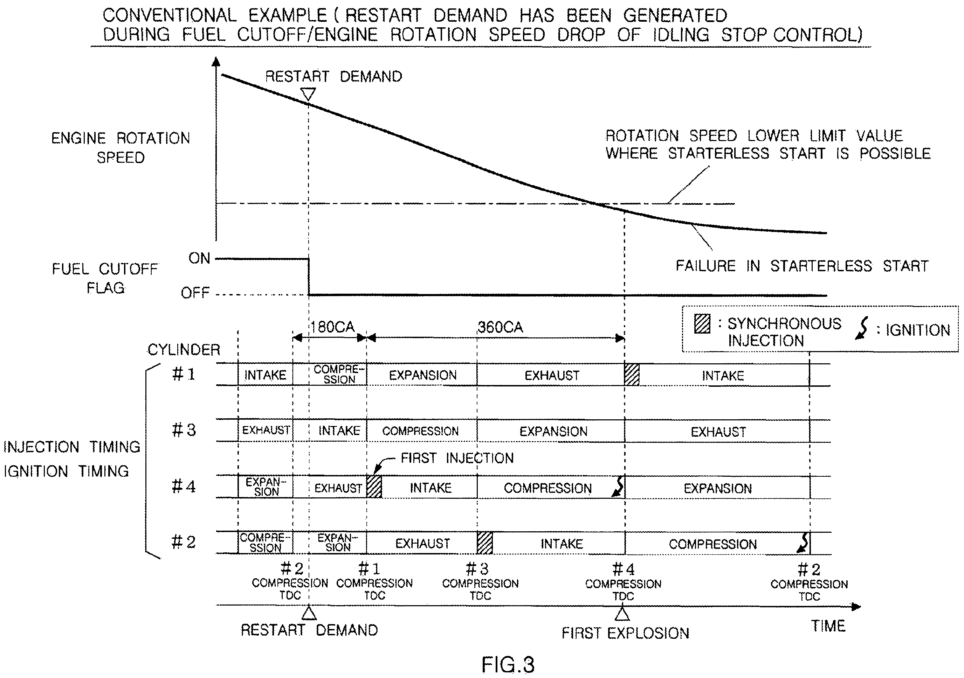

The reason will be described below with reference to FIG. 3. Fig. 3 shows a control example of a four-stroke engine.

When a restart demand is generated during fuel cutoff/engine rotation dropping of the idling stop control, either (No. 4 cylinder in FIG. 3) of cylinders first reaches an injection timing of the synchronous injection (near intake TDC), fuel is injected into the cylinder, and ignition is thereafter performed to generate first explosion when an ignition timing of the cylinder (near compression TDC) is reached. In the four-stroke engine, therefore, there is the possibility that a period (540CA at most) obtained by further adding a period about 360 CA (corresponding to one revolution of a crank shaft) to a period (180CA at most) up to first reaching the injection timing of the synchronous injection elapses until the first explosion is generated after generation of the restart demand and the engine rotation speed drops to the rotation speed lower limit value where starterless starting is possible or less during that to fail in starterless starting.

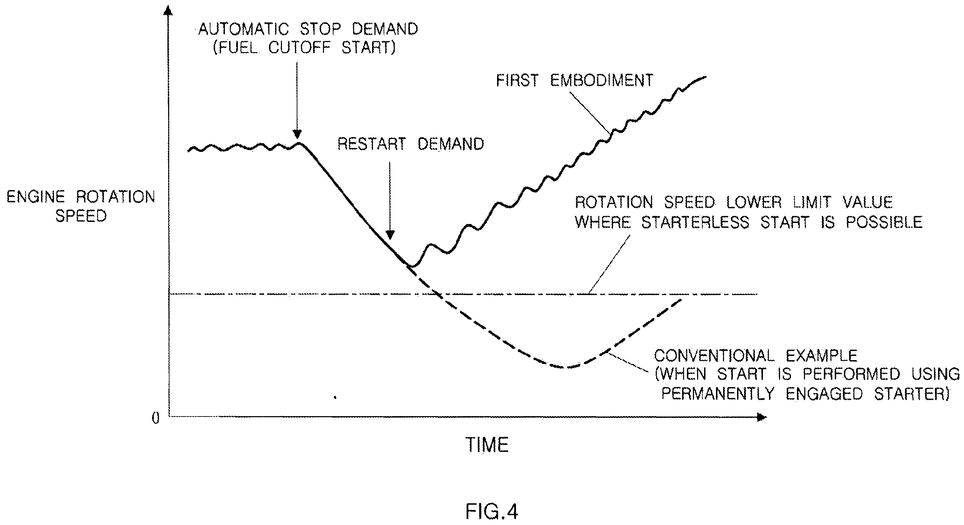

In the conventional system, as the countermeasure to this problem, it is necessary to estimate a large range of engine rotation dropping occurring from a restart demand generation to generation of the first explosion to set a higher determination threshold of a rotation speed where starterless start is possible, so that the rotation speed region where the starterless starting is possible is narrowed while a starter use region is expanded, which results in increase of the number of times of starter starting. In addition, when restart is performed using the starter, because the restart is performed after engine stopping or the restart cannot be performed even in the permanently engaged starter until the engine rotation speed drops down to the rotation speed range where starting can be performed by the starter, which is lower that the rotation speed lower limit value where starterless starting is possible, it takes time from the automatic stop demand generation to the restarting completion, which causes the driver to feel delay (dullness) of restart, as shown in FIG. 4.

Recently, it is demanded to expand the fuel cutoff region of the idling stop control to a deceleration region at a low speed which may result in stopping of a vehicle during vehicle running in order to achieve further improvement of fuel efficiency, and because it is predicted that the number of times of the restart demand generation during fuel cutoff/engine rotation speed dropping of the idling stop control increasingly increases from now, it becomes a recent important technical problem to expand the rotation speed region where starterless starting is possible to the side of a low rotation.

Therefore, the problem to be solved by the present invention is to provide an automatic stop and start control apparatus of an internal combustion engine which can expand a rotation speed region where autonomous return control can be performed (starterless starting is possible) when a restart demand is generated during fuel cutoff/internal combustion engine rotation drop of the idling stop control to a rotation side lower than the conventional rotation side and can improve durability of the starter as compared with the conventional durability while suppressing increase of the number of times of starter, starting.

### Means for solving the Problem

In order to solve the above problem, the present invention is configured to include an automatic stop control means for stopping fuel injection when an automatic stop demand has been generated during operation of an internal combustion engine of an intake port injection type, and an automatic start control means for performing autonomous return control where returning to synchronous injection is performed after at least the first fuel injection is immediately performed with "asynchronous injection" to restart the internal combustion engine when a restart demand has been generated in a period where a rotation speed of the internal combustion engine drops through a rotation speed region where restart can be performed by only fuel injection during fuel injection stop (during fuel cutoff) performed by the automatic stop control means.

According to this configuration, since when a restart demand is generated in the rotation speed region where restart can be performed by only fuel injection during fuel cutoff/internal combustion engine rotation drop of the automatic stop control (idling stop control), at least first fuel injection is performed with "asynchronous injection" immediately, fuel for the asynchronous injection is sucked in a cylinder put in an intake stroke at a time of the restart demand generation and it is ignited near the next compression TDC so that the first combustion (first explosion) is generated. Thereby, as compared with the conventional restart control (see FIG. 3), it becomes possible to shorten the period from the restart demand generation to the first explosion generation by a period corresponding to one stroke (180 CA in a four-stroke engine and 120 CA in a six-stroke engine) to generate an first explosion early, and it is correspondingly possible to expand the rotation speed region where the autonomous return control can be performed (starterless start is possible) when a restart demand is generated during fuel cutoff/internal combustion engine rotation drop of the idling stop control to a rotation side lower than the conventional rotation side, so that it is possible to improve durability of the starter as compared with the conventional durability while suppressing increase of the number of times of starter starting, and it is possible to shorten a time from the restart demand generation to the restart completion largely as compared with the conventional time, which does not cause the driver to feel delay (dullness) of restart.

As described above, since pulse signals are outputted in synchronism with rotation of the internal combustion engine from rotation angle sensors (a crank angle sensor and a cam angle sensor) even during fuel cutoff/internal combustion engine rotation speed drop of the idling stop control like during an ordinary operation so that detection of a crank angle and cylinder discrimination can be performed, a cylinder put during an intake stroke when the restart demand has been generated during internal combustion engine rotation dropping can be discriminated. In the present invention, therefore, such control that at least first fuel injection to a cylinder put during an intake stroke when a restart demand has been generated is immediately performed with asynchronous injection is made possible. In this case, regarding the cylinders other than the cylinder put during the intake stroke, they are not require to perform asynchronous injection necessarily, and they can perform synchronous injection in synchronism with an intake stroke of each cylinder.

However, the present invention may be configured such that at least first fuel injections are simultaneously performed to all cylinders with asynchronous injection immediately when a restart demand has been generated. For example, when a driver demands rapid acceleration by stepping an accelerator pedal rapidly, if asynchronous injections are simultaneously performed to all cylinders, regarding cylinders other than a cylinder which is put during an intake stroke and which first generates combustion after the restart demand generation, an effect of correcting a learn air-fuel ratio due to delay of fuel supply into the cylinders can be expected, so that acceleration performance can be improved.

In this case, such a configuration can be adopted that an injection amount of the asynchronous injection is changed in response to a crank angle when the restart demand has been generated. For example, there is the possibility that, according to approaching of a timing of the asynchronous injection to the end of the intake stroke (BDC: bottom dead center), a remaining period of the intake stroke where fuel of the asynchronous injection can be sucked into the cylinder is reduced, and a fuel amount sucked in the cylinder put during the intake stroke is made insufficient, which results in failure in first explosion. As the countermeasure to this problem, for example, if fuel is forcibly injected into the cylinder by increasing an injection amount of the asynchronous injection according to approaching of the crank angle when the restart demand has been generated to the end of intake stroke (BDC), it becomes possible to correct the air-fuel ratio of air-fuel mixture an the cylinder put during the intake stroke to a combustible air-fuel ratio range.

Further, such a configuration can be adopted that the injection amount of the asynchronous injection is set based upon at least one of an intake pipe pressure, an intake air amount, an internal combustion engine rotation speed, and a cooling water temperature when the restart demand has been generated. Since a throttle valve is kept in a completely closed state during fuel cutoff/internal combustion engine rotation dropping, the intake pipe pressure or the intake air amount is changed or a vaporization rate of fuel of the asynchronous injection or a wet amount (an amount of fuel attached to a wall face) is also changed according to the rotation speed of the internal combustion engine at the time of the restart demand generation. For example, according to lowering of the intake pipe pressure, the vaporization rate of fuel become faster, which results in reduction of the wet amount, so that an injection amount of the asynchronous injection can be decreased. Further, when a driver generates a restart demand by stepping an accelerator pedal during fuel cutoff/internal combustion engine rotation dropping, an intake air amount (an air amount which has been charged into a cylinder) after the restart demand generation increases rapidly, so that the injection amount of the asynchronous injection can be increased in anticipation of the rapid increase.

Further, the present invention can be configured such that, when the remaining period of an intake stroke of a cylinder put during the intake stroke when a restart demand has been generated is a predetermined value or less, the asynchronous injection is not performed to the cylinder put during the intake stroke but the synchronous injection can be performed to a cylinder next performing an intake stroke from the first fuel injection. When the remaining period of the intake stroke when the restart demand has been generated is excessively short, even if the injection amount of asynchronous injection is increased, failure of first explosion results from shortage of the fuel amount sucked into the cylinder. In such a case, therefore, if the asynchronous injection is not performed to the cylinder put during an intake stroke at the time of the restart demand generation but the synchronous injection can be performed to a cylinder next performing an intake stroke from the first fuel injection, a portion of the fuel of the first asynchronous injection can be prevented from being sucked into the cylinder to be discharged to an exhaust pipe as it is uncombusted or as it is insufficiently combusted.

Further, such a configuration can be adopted that, when the cooling water temperature at the time of the restart demand generation is a predetermined temperature or lower, the autonomous return control is not performed but the internal combustion engine is restarted using the starter or the motor which also serves as the starter, When the cooling water temperature is low (for example, at an unwarmed state), there is a possibility that friction (rotation resistance) of the internal combustion engine becomes large and the wet amount increases, and vaporization performance of fuel lowers, which results in deterioration of combustion performance of air-fuel mixture, so that restart performed by only fuel injection is unsuccessful. Accordingly, when the cooling water temperature is low, restarting performance when the cooling water temperature is low can be secured by restarting the internal combustion engine using the starter or the motor which also serves as the starter.

### Brief Description of the Drawings

FIG. 1 is a schematic configuration diagram of a whole engine control system in a first embodiment of the present invention;
FIG. 2 is a time chart for explaining one example of an autonomous return control (asynchronous injection is present) when a restart demand has been generated during fuel cutoff/engine rotation dropping of an idling stop control of the first embodiment;
FIG. 3 is a time chart for explaining one example of a restart control (asynchronous injection is absent) when a restart demand has been generated during fuel cutoff/engine rotation dropping of a conventional idling stop control;
FIG. 4 is a time chart for explaining one example of the autonomous return control (asynchronous injection is present) of the first embodiment in contrast with the conventional example; and
FIG. 5 is a flowchart showing a flow of a processing of a during-idling-stop restart control program.

### Best Mode for carrying out the Invention

Two embodiments embodying an aspect for carrying out the invention will be described below.

### First Embodiment

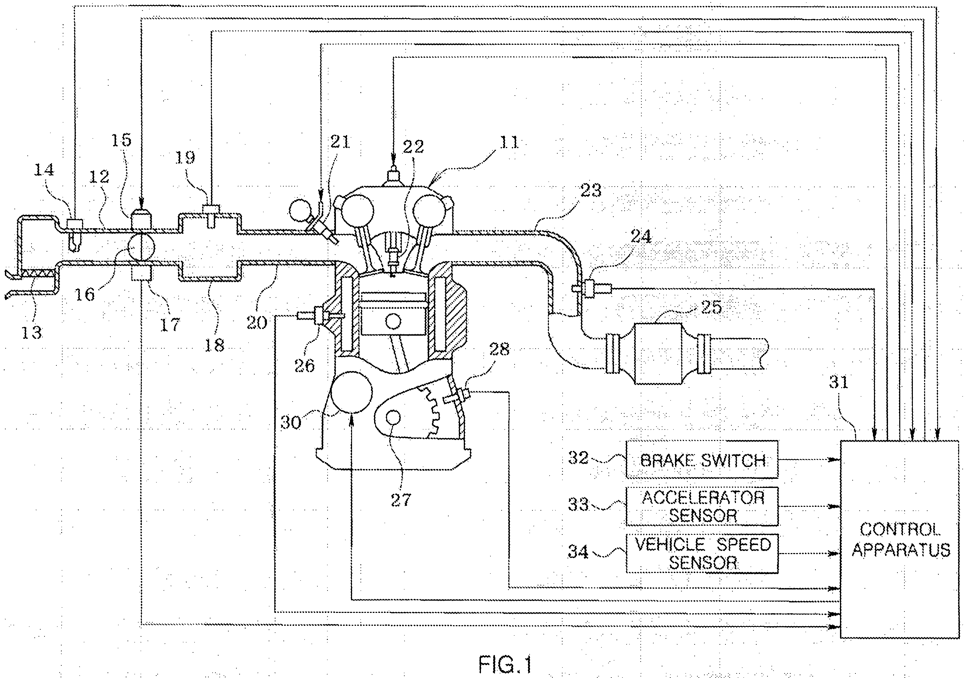

A first embodiment of the present invention will be described with reference with FIG. 1 to FIG. 5

First, a schematic configuration of a whole engine control system will be described with reference to FIG. 1.

An air cleaner 13 is provided at the most upstream section of an intake pipe 12 of an engine 11 of an intake port injection type which is an internal combustion engine of an intake port injection type, and an airflow meter 14 for detecting an intake air amount is provided on a downstream side of the air cleaner 13. A throttle valve 16 whose opening degree is adjusted by a motor 15 and a throttle valve opening degree sensor 17 which detects an opening degree of the throttle valve 16 (a throttle opening degree) are provided on a downstream side of the airflow meter 14.

Further, a serge tank 18 is provided on a downstream side of the throttle valve 16, and an intake pipe pressure sensor 19 which detects an intake pipe pressure is provided at the serge tank 18. Further, an intake manifold 20 which introduces air to each cylinder of the engine 11 is connected with the serge tank 18, and a fuel injection valve 21 which injects fuel to an intake port is attached near the intake port of the intake manifold 20 of each cylinder. Further, an ignition plug 22 is attached to a cylinder head of the engine 11 for each cylinder, and air-fuel mixture in the cylinder is ignited by spark discharge of each ignition plug 22.

On the other hand, exhaust gas sensors 24 (an air-fuel ratio sensor, an oxygen sensor, or the like) which detect an air-fuel ratio of exhaust gas, rich/lean, and the like are provided in an exhaust pipe 23 of the engine 11, and a catalyst 25 such as a three-way catalyst for cleaning up exhaust gas is provided on the downstream side of the exhaust gas sensors 24.

Further, a cooling water temperature sensor 26 which detects a cooling water temperature is attached to a cylinder block of the engine 11. A crank angle sensor 28 which outputs a pulse signal each time when a crank shaft 27 rotates by a predetermined crank angle is attached to the side of an outer periphery of the crank shaft 27 of the engine 11, so that an engine rotation speed is detected based upon an interval (cycle) of output pulses of the crank angle sensor 28 and detection of a crank angle and cylinder discrimination [discrimination a cylinder put during an intake stroke (a cylinder performing synchronous injection) and a cylinder put under a compression stroke (an igniting cylinder)] are performed by counting output pulses of the crank angle sensor 28 based upon output signals of a cam angle sensor (not shown) or a tooth-missing portion of the crank angle sensor 28 (a reference crank angle).

Further, a starter 30 for rotationally driving (cranking) the crank shaft 27 at an ordinary starting time other than a starterless starting time described later is attached to the engine 11. As the starter 30, a starter of a permanently engaged type where a pinion always meshes with a ring gear coupled to the crank shaft 27 of the engine 11 can be used or a starter configures such that a pinion is protruded to mesh with a ring gear only at an ordinary starting time other than a starterless starting time may be used. Further, in a hybrid electric vehicle, a motor for vehicle driving can be used as a starter.

A control apparatus 31 which controls operations of the engine 11 and the starter 30 is composed of one or a plurality of ECUs (for example, an ECU for an engine, an ECU for idling stop). The control apparatus 31 is inputted with signals from various sensors detecting an driving state, for example, not only the above-described airflow meter 14, throttle opening degree sensor 17, intake pipe pressure sensor 19, exhaust gas sensor 24, and cooling water temperature sensor 26 but also a brake switch 32 detecting activation (ON)/deactivation (OFF) of the brake, an accelerator sensor 33 detecting an accelerator opening degree, a vehicle speed sensor 34 detecting a vehicle speed, and the like.

The control apparatus 31 controls the fuel injection amount, the intake air amount (throttle opening degree), and an ignition timing of the engine 11 during engine operation in response to operation conditions detected by the above-described various sensors. Further, the control apparatus 31 functions as automatic stop control means and automatic start control means described in the claims, and it monitors whether or not an automatic stop demand (an idling stop demand) has been generated during engine operation and stops fuel injection (performs fuel cutoff) to automatically stop combustion in the engine 11 (stop idling) when the automatic stop demand has been generated.

The automatic stop demand may be generated during vehicle stopping after vehicle has stopped, but in the first embodiment, the automatic stop demand is also generated even in a deceleration region at a low speed which may result in vehicle stop during vehicle running in order to expand a fuel cutoff region of the idling stop control. Specifically, whether or not a vehicle has reached a certain predetermined deceleration state which may result in vehicle stop during vehicle running (whether or not an automatic stop demand has been generated) is determined based upon the following conditions. For example, (1) whether or not the accelerator is off (the throttle is completely closed), (2) whether or not the brake is on, and (3) whether or not the vehicle speed is in a low speed region equal to a predetermined vehicle speed or less are determined, and when the state where all of the conditions (1) to (3) are satisfied continues for a predetermined time period or more, a certain predetermined deceleration state which may result in vehicle stop is determined. Incidentally, it goes without saying that a determining method of the certain predetermined deceleration state which may result in vehicle stop may be optionally changed.

At a time point when it has been determined that the vehicle speed is in the certain predetermined deceleration state which may result in vehicle stop during vehicle running, it is determined that the automatic stop demand (idling stop demand) has been generated, so that combustion in the engine 11 is automatically stopped (idling stop is performed) by stopping fuel injection (performing fuel cutoff). Thereafter, when a driver conducts an operation (for example, cancel of a braking operation, an accelerator-pedal stepping operation, operation of the shift lever to the drive range, and the like) for re-accelerating or starting the vehicle during an idling stop period (during engine rotation dropping or after engine rotation stop due to fuel cutoff), a restart demand is generated to restart the engine 11. Besides, there is such a case that a restart demand is generated from a battery charging control system or a control system of a vehicle-mounting device such as an air conditioner to restart the engine 11.

In an intake port injection-type engine 11 with an advanced electronic control, synchronous injection which injects fuel in synchronism with an intake stroke of each cylinder is performed during normal operation, pulse signals are outputted from the crank angle sensor 28 and the cam angle sensor in synchronism with rotation of the engine 11 for a period where the engine rotation speed drops due to fuel cutoff of the idling stop control like during the ordinary operation, and detection of the crank angle and cylinder discrimination (determination of a cylinder put during an intake stroke) are performed, so that synchronous injection is made possible. In the conventional system, therefore, when a restart demand is generated during fuel cutoff/engine rotation dropping of the idling stop control, fuel injection is resumed with "synchronous injection" from the beginning and the engine is restarted by injecting fuel in synchronous with an intake stroke of each cylinder.

However, like the above conventional system, if fuel injection is resumed witch "synchronous injection" from the beginning to restart the engine 11 when a restart demand has been generated, it takes time from the generation of the restart demand to generation of the first combustion (first explosion), the engine rotation speed drops to the rotation speed lower limit value where starterless starting is possible or less, which may fail in starterless starting.

The reason will be described below with reference to FIG. 3. FIG. 3 is a control example of a four-stroke engine.

When a restart demand is generated during fuel cutoff/engine rotation dropping of the idling stop control, either cylinder (No. 4 cylinder in FIG. 3) thereafter first reaches an injection timing (near intake TDC) of synchronous injection, and after fuel is injected into the cylinder, ignition is performed to generate first explosion at an ignition timing (near compression TDC) of the cylinder. Therefore, in the four-stroke engine, there is a possibility that a period (540CA at most) obtained by further adding a period about 360 CA (corresponding to one revolution of the crank shaft) to a period (180CA at most) up to first reaching the injection timing of the synchronous injection elapses until the first explosion is generated after the generation of the restart demand and the engine rotation speed drops to the rotation speed lower limit value where starterless starting is possible or less during that to fail in starterless starting.

In the conventional system, as the countermeasure to this problem, it is necessary to estimate a large range of engine rotation dropping occurring from a restart demand generation to generation of an first explosion to set a higher determination threshold of a rotation speed where starterless start is possible correspondingly, so that the rotation speed region where the starterless starting is possible is narrowed while a starter use region is expanded, which results in increase of the number of times of starter starting. In addition, when restart is performed using the starter, because the restart is performed after engine stopping or the restart cannot be performed even in the permanently engaged starter until the engine rotation speed drops down to the rotation speed range where starting can be performed by the starter, which is lower that the rotation speed lower limit value where starterless starting is possible, it takes time from the automatic stop demand generation to the restart completion, which causes the driver to feel delay (dullness) of restart, as shown in FIG. 4.

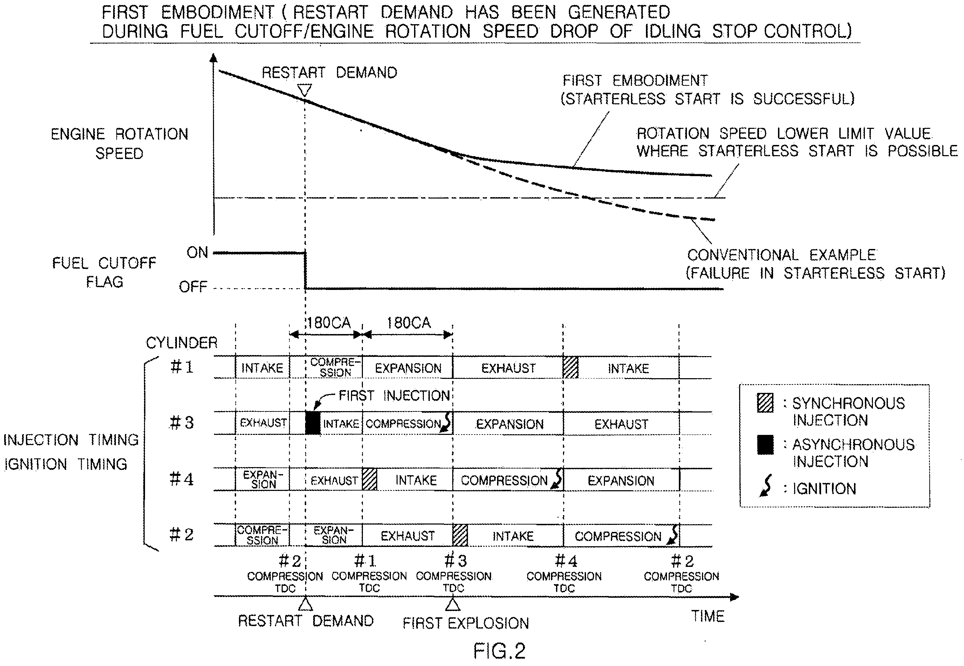

In the first embodiment, therefore, as shown in FIG. 2, when a restart demand is generated in a period where the engine rotation speed drops to the rotation speed region where starterless starting is possible (restart can be performed by only fuel injection) during fuel cutoff of the idling stop control, "autonomous return control" where returning to synchronous injection is performed after the first fuel injection is immediately performed with "asynchronous injection" is performed so that starterless starting which restarts the engine 11 by only fuel injection without using the starter 30 is performed. By adopting such a configuration, fuel of asynchronous injection is sucked into a cylinder put during an intake stroke at the time of the restart demand generation to be ignited near the next compression TDC so that the first combustion (first explosion) is generated. Thereby, as compared with the conventional restart control (see FIG. 3), it becomes possible to shorten the period from the restart demand generation to the first explosion generation by a period (corresponding to one stroke (180 CA in a four-stroke engine and 120 CA in a six-stroke engine) to generate an first explosion early, and it is correspondingly possible to expand the rotation speed region where the autonomous return control can be performed (starterless start is possible) when a restart demand has been generated during fuel cutoff/engine rotation drop of the idling stop control to a rotation side lower than the conventional rotation side, so that it is possible to improve durability of the starter 30 as compared with the conventional durability while suppressing increase of the number of times of starting of the starter 30, and it is possible to shorten a time from the restart demand generation to the restart completion largely as compared with the conventional time, which does not cause the driver to feel delay (dullness) of restart.

Further, in the first embodiment, paying attention to such a point that a cylinder put in an intake stroke can be discriminated even during fuel cutoff/engine rotation dropping of the idling stop control like during an ordinary operation, when a restart demand has been generated, the first fuel injection is performed to only a cylinder put during the intake stroke with asynchronous injection and asynchronous injections are not performed to the other cylinders but synchronous injections are performed thereto in synchronism with an intake stroke of each of them.

Furthermore, in the first embodiment, an injection amount of asynchronous injection is varied according to a crank angle when a restart demand has been generated. For example, there is a possibility that, according to approaching of a timing of the asynchronous injection to the end of the intake stroke (BDC: bottom dead center), a remaining period of the intake stroke where fuel of the asynchronous injection can be sucked into the cylinder is reduced, and a fuel amount sucked in the cylinder put during the intake stroke is made insufficient, which results in failure in first explosion. As the countermeasure to this problem, for example, fuel is forcibly charged into the cylinder by increasing an injection amount of the asynchronous injection according to approaching of the crank angle when the restart demand has been generated to the end of the intake stroke (BDC). By adopting such a configuration, it is made possible to correct the air-fuel ratio of air-fuel mixture in the cylinder to a combustible air-fuel ratio range.

Further, in the first embodiment, an injection amount of asynchronous injection is set based upon at least one of an intake pipe pressure, an intake air amount, an engine rotation speed, and a cooling water temperature obtained when a restart demand has been generated. Since a completely closed state of the throttle valve 16 is maintained during fuel cutoff/engine rotation dropping, the intake pipe pressure and the intake air amount are varied and a vaporization rate of fuel of the asynchronous injection and a wet amount (an amount of fuel attached to a wall face) are varied according to the engine rotation speed at the time of the restart demand generation. For example, the lower the intake pipe pressure, the faster the vaporization rate of fuel and the less the wet amount, so that the injection amount of the asynchronous injection may be decreased. Further, the lower the cooling water temperature, the more the wet amount, so that the injection amount of the asynchronous injection can be increased. When a driver steps the accelerator pedal during fuel cutoff/engine rotation dropping so that a restart demand has been generated, an intake air amount after the generation of the restart demand (an in-cylinder charged air amount) rapidly increases, so that the injection amount of the asynchronous injection can be increased in anticipation of such rapid increase.

Moreover, in the first embodiment, when the remaining period elapsing until the intake valve 34 of a cylinder put during an intake stroke at the time of a restart demand generation is closed is a predetermined value or less (for example, 10 CA or less), the asynchronous injection is not performed to the cylinder put during the intake stroke but a synchronous injection is performed to a cylinder whose intake valve 34 is next opened from the first fuel injection. When the remaining period of the intake stroke at the time of the restart demand generation becomes excessively small, even if the injection amount of the asynchronous injection is increases, the fuel amount sucked into the cylinder becomes insufficient, which fails in first explosion. In such a case, the asynchronous injection is not performed to the cylinder put during the intake stroke, but if synchronous injection is performed to a cylinder whose intake stroke is next performed from the first fuel injection, a portion of the fuel of the first asynchronous injection can be prevented from being sucked into the cylinder to be discharged to the exhaust pipe 23 as it is uncombusted or as it is insufficiently combusted.

Further, in the first embodiment, when the cooling water temperature at the time of the restart demand generation is a predetermined temperature or lower, the autonomous return control (starterless starting) is not performed but the engine 11 is restarted using the starter 30 (or the motor which also serves as the starter). When the cooling water temperature is low (for example, the engine 11 is put in an unwarming state), there is a possibility that the friction (rotation resistance) of the engine 11 becomes large, the wet amount increases, and vaporization performance of fuel lower, so that combustibility of the air-fuel mixture deteriorates, which results in failure in restart performed by only fuel injection. Accordingly, when the cooling water temperature is low, if the engine 11 is restarted using the starter 30 (or the motor which also serves as the starter), a restart performance when a cooling water temperature is low can be secured.

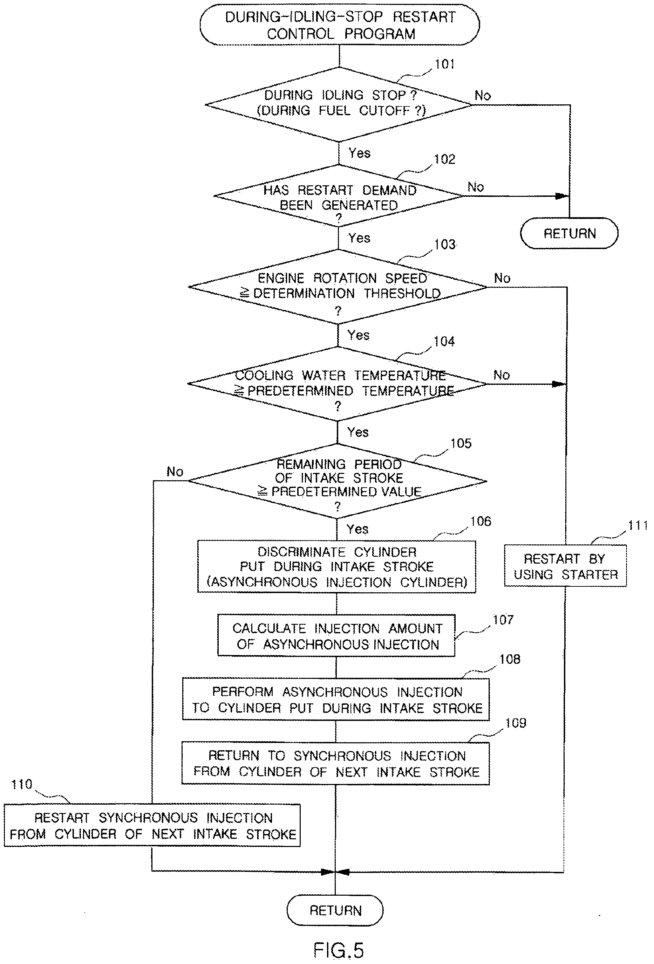

The restart control during idling stop of the first embodiment 1 as explained above is performed by the control apparatus 31 according to a during-idling-stop restart control program shown in FIG. 5 in the following manner.

The during idling-stop restart control program shown in FIG. 5 is repeatedly executed with a predetermined period during power-on of the control apparatus 31 (during ON of an ignition switch), and it serves as automatic start control means described in the Claims. When this program is started up, whether or not the engine 11 is put during idling stop (during fuel cutoff) is determined at Step 101, and unless the engine 11 is put during idling stop (during fuel cutoff), this program is terminated without performing the following processes.

On the other hand, when it is determined at the above Step 101 that the engine 11 is put during idling stop (during fuel cutoff), the control proceeds to Step 102, where whether or not a restart demand has been generated is determined, and unless the restart demand has been generated, the state that the engine 11 is put during idling stop (during fuel cutoff) continues as it is, and this program is terminated.

When it is determined at the above Step 102 that the restart demand has been generated, whether or not the starterless start execution conditions (autonomous return control performance conditions) are satisfied is determined based upon whether or not determination of "Yes" is made regarding each of all Steps 103 to 105. Specifically, whether or not an engine rotation speed at the present time is a determination threshold corresponding to a lower limit value of a rotation speed region where a starterless starting is possible (an autonomous return control can be performed) or higher is first determined at Step 103, and when the engine rotation speed is less than the determination threshold at this time, it is determined that the starterless starting is hard (the starterless starting execution condition is not satisfied), the control proceeds to Step 111, where, while power is fed to the starter 30 to perform cranking of the engine 11, fuel injection is resumed and the engine 11 is restarted. In this case, the fuel injection can be resumed with the synchronous injection, but it may be resumed with the asynchronous injection.

On the other hand, when it is determined at the above Step 103 that the engine rotation speed at the present time is the determination threshold or higher, it is determined that the engine rotation speed at the present time falls in the rotation speed region where starterless starting is possible (the autonomous return control can be performed), and the control proceeds to Step 104, where whether or not the cooling water temperature at the present time is a predetermined temperature corresponding to a lower limit value of a water temperature region where the starterless starting is possible (the autonomous return control can be performed) or higher is determined. At a result, when the cooling water temperature is lower than the predetermined temperature, it is determined that the starterless starting is hard (the starterless starting execution condition is not satisfied), and the control proceeds to Step 111, where while cranking of the engine 11 is performed using the starter 30, fuel injection is resumed to restart the engine 11.

On the other hand, when it is determined at the above Step 104 that the cooling water temperature at the present time is the predetermined temperature or higher, it is determined that the cooling water temperature falls in the water temperature region where the starterless starting is possible (the autonomous return control can be performed), and the control proceeds to Step 105, where whether or not the remaining period of the intake stroke at the time of the restart demand generation (a period from the crank angle at the time of the restart demand generation to the intake BDC) is a predetermined value or higher is determined. Here, the predetermined value is set to a period at least required for sucking fuel required to generate the first explosion (for example, 10 CA).

When it is determined at this Step 105 that the remaining period of the intake stroke at the time of the restart demand generation is the predetermined value or higher, it is determined that the period required to suck fuel required to generate the first explosion remains. As described above, when "Yes" is determined at all Steps 103 to 105, it is determined that the starterless start execution condition (the autonomous return control performance condition) is satisfied, so that the starterless start (the autonomous return control) is performed according to the processing of Steps 106 to 109 in the following manner.

A cylinder put during an intake stroke at the generation time of the restart demand (a cylinder where the asynchronous injection is performed) is first determined based upon the crank angle at the generation time of the restart demand at Step 106. Thereafter, the control proceeds to Step 107, where the injection amount of the asynchronous injection is calculated based upon at least one of the intake pipe pressure, the intake air amount, the engine rotation speed, the cooling water temperature, and the remaining period of the intake stroke at the time of the restart demand generation utilizing a map or the like. At this time, for example, the injection amount of the asynchronous injection is increased according to shortening of the remaining period of the intake stroke at the time of the restart demand generation, the injection amount of the asynchronous injection is reduced according to lowering of the intake pipe pressure, the injection amount of the asynchronous injection is increased according to lowering of the cooling water temperature, or the injection amount of the asynchronous injection is increased according to increasing of the intake air amount.

Thereafter, the control proceeds to Step 108, where fuel injection is resumed to the cylinder put during the intake stroke at the time of the restart demand generation with the asynchronous injection. The fuel of the asynchronous injection is sucked into the cylinder and ignited near the next compression TDC, so that the first combustion (first explosion) is generated. Thereafter, the control proceeds to Step 109, where the cylinders return to the synchronous injection from a cylinder where an intake stroke is next performed to complete the starterless start.

On the other hand, when it is determined at the above Step 105 that the remaining period of the intake stroke at the time of the restart demand generation is less than the predetermined value, it is determined that a period for sucking fuel required for generating the first explosion is insufficient, so that the control proceeds to Step 110, where the asynchronous injection to the cylinder put during the intake stroke at the time of the restart demand generation is not performed and the synchronous injection is resumed to a cylinder where the intake stroke is next performed from the first fuel injection, thereby performing starterless start of the engine 11. In this case, as described above, since the lower limit value of the rotation speed region where restart can be performed with the synchronous injection is higher than the lower limit value of the rotation speed region where restart is possible with the asynchronous injection (the determination threshold at Step 103), there is a possibility that the engine rotation speed is already lower than the lower limit value of the rotation speed region where restart is possible with the synchronous injection, so that if the engine rotation speed is lower than the lower limit value of the rotation speed region where restart is possible with the synchronous injection, the engine 11 may be restarted using the starter 30.

According to the first embodiment described above, when a restart demand has been generated in a period where the engine rotation speed drops in the rotation speed region where the starterless start is possible (restart performed by only fuel injection is possible) during fuel cutoff of the idling stop control, the "autonomous return control" where returning to the synchronous injection is performed after the first fuel injection is immediately performed with the "asynchronous injection" is performed and the starterless start which restarts the engine 11 by only fuel injection without using the starter 30 is performed, so that, as compared with the conventional restart control (see FIG. 3), it becomes possible to shorten the period from the restart demand generation to the first explosion generation by a period corresponding to one stroke (180 CA in a four-stroke engine and 120 CA in a six-stroke engine) to generate the first explosion early, and it is correspondingly possible to expand the rotation speed region where the autonomous return control can be performed (starterless start is possible) when a restart demand has been generated during fuel cutoff/engine rotation drop of the idling stop control to a rotation side lower than the conventional rotation side, so that it is possible to improve durability of the starter 30 as compared with the conventional durability while suppressing increase of the number of times of starting performed by the starter 30, and it is possible to shorten a time from the restart demand generation to the restart completion largely as compared with the conventional time, which does not cause the driver to feel delay (dullness) of restart.

### Second Embodiment

In the above first embodiment, the first fuel injection is performed to only a cylinder put during an intake stroke at the time of the restart demand generation with the asynchronous injection, but in the second embodiment of the present invention, when a restart demand has been generated in a period where the engine rotation speed drops through the rotation speed region where the starterless start is possible (restart performed by only fuel injection is possible) during fuel cutoff of the idling stop control, the autonomous return control where returning to the synchronous injection is performed after the first fuel injections are immediately performed to all the cylinders with the asynchronous injection simultaneously is performed and the starterless start which restarts the engine 11 by only fuel injection without using the starter 30 is performed. The other matters are the same as the first embodiment.

For example, when a driver demands rapid acceleration by stepping an accelerator pedal rapidly, if asynchronous injections are simultaneously performed to all cylinders, regarding cylinders other than the cylinder which is put during an intake stroke and which first generates combustion after the restart demand generation, an effect of correcting a lean air-fuel ratio due to delay of fuel supply into the cylinders can be expected, so that acceleration performance can be improved.

Incidentally, though the first and second embodiment are configured such that when a restart demand has been generated, only the first fuel injection is performed with the asynchronous injection, it goes without saying that fuel injection may be performed plural times with the asynchronous injection from the beginning.

Besides, the present invention can be applied to an engine having the number of cylinders other than four cylinders, can be applied to a hybrid electric vehicle which also utilizes a motor for vehicle driving as a starter to be implemented, or the like, and it can be variously modified without departing from the gist of the invention to be implemented.

### Description of Reference Numerals

11···engine (internal combustion engine), 12···intake pipe, 16···throttle valve, 21···fuel injection valve, 22···ignition plug, 23···exhaust pipe, 30···starter, 31···control apparatus (automatic stop control means, automatic start control means), 32···brake switch, 33···accelerator sensor, 34···vehicle speed sensor

## Claims

1. An automatic stop and start control apparatus of an internal combustion engine, which is provided with automatic stop control means for stopping fuel injection when an automatic stop demand has been generated during operation of an internal combustion engine of an intake port injection type and automatic start control means for performing autonomous return control where returning to synchronous injection is performed after at least the first fuel injection is immediately performed with asynchronous injection to restart the internal combustion engine when a restart demand has been generated in a period where the rotation speed of the internal combustion engine drops through a rotation speed region where restart performed by only fusel injection is possible during fuel injection stop performed by the automatic stop control means,
**characterised in that**
the automatic start control means immediately performs at least the first fuel injection to a cylinder which is put during an intake stroke with the asynchronous injection when the restart demand has been generated.

2. The automatic stop and start control apparatus of an internal combustion engine according to claim 1, wherein the automatic start control means changes an injection amount of the asynchronous injection according to a crank angle when the restart demand has been generated.

3. The automatic stop and start control apparatus of an internal combustion engine according to any one of claims 1 or 2, wherein the automatic start control means sets an injection amount of the asynchronous injection based upon at least one of an intake pipe pressure, an intake air amount, an internal combustion engine rotation speed, and a cooling water temperature when the restart demand has been generated.

4. The automatic stop and start control apparatus of an internal combustion engine according to any one of claims 1 or 2, wherein when a remaining period of an intake stroke of a cylinder put during the intake stroke when the restart demand has been generated is a predetermined value or less, the automatic start control means performs synchronous injection to a cylinder which is next put in an intake stroke from the first fuel injection without performing the asynchronous injection to the cylinder put during an intake stroke.

5. The automatic stop and start control apparatus of an internal combustion engine according to any one of claims 1 or 2, wherein when a cooling water temperature when the restart demand has been generated is a predetermined temperature or lower, the automatic start control means restarts the internal combustion engine using a starter or a motor which also serves as a starter without performing the autonomous return control.

## Patentansprüche

1. Automatische Start- und Stopp-Steuervorrichtung einer Verbrennungskraftmaschine, die über eine automatische Stopp-Steuereinrichtung zum Stoppen der Kraftstoffeinspritzung, wenn eine automatische Stoppanforderung während des Betriebs einer Verbrennungskraftmaschine eines Ansaugkanaleinspritztyps erzeugt wird, und über eine automatische Start-Steuereinrichtung zum Durchführen einer autonomen Rückkehrsteuerung verfügt, wo eine Rückkehr zur synchronen Einspritzung durchgeführt wird, nachdem zumindest die erste Kraftstoffeinspritzung unverzüglich mit asynchroner Einspritzung durchgeführt wird, um die Verbrennungskraftmaschine neu zu starten, wenn eine Neustartanforderung in einem Zeitraum erzeugt wird, in dem die Drehzahl der Verbrennungskraftmaschine durch einen Drehzahlbereich absinkt, in dem ein Neustart, der nur durch eine Kraftstoffeinspritzung durchgeführt wird, möglich ist, während das Stoppen der Kraftstoffeinspritzung durch die automatische Stopp-Steuereinrichtung durchgeführt wird,
**dadurch gekennzeichnet, dass**
die automatische Start-Steuereinrichtung unverzüglich zumindest die erste Kraftstoffeinspritzung in einen Zylinder durchführt, die während eines Ansaugtakts mit der asynchronen Einspritzung stattfindet, wenn die Neustartanforderung erzeugt wird.

2. Automatische Start- und Stopp-Steuervorrichtung einer Verbrennungskraftmaschine nach Anspruch 1, wobei die automatische Start-Steuereinrichtung eine Einspritzmenge der asynchronen Einspritzung in Übereinstimmung mit einem Kurbelwinkel ändert, wenn die Neustartanforderung erzeugt wurde.

3. Automatische Start- und Stopp-Steuervorrichtung einer Verbrennungskraftmaschine nach einem der Ansprüche 1 oder 2, wobei die automatische Start-Steuereinrichtung eine Einspritzmenge der asynchronen Einspritzung auf Basis zumindest eines von einem Ansaugrohrdruck, einer Ansaugluftmenge, einer Drehzahl der Verbrennungskraftmaschine und einer Kühlwassertemperatur einstellt, wenn die Neustartanforderung erzeugt wurde.

4. Automatische Start- und Stopp-Steuervorrichtung einer Verbrennungskraftmaschine nach einem der Ansprüche 1 oder 2, wobei, wenn eine verbleibende Zeitspanne eines Ansaugtakts eines Zylinders während des Ansaugtakts, wenn die Neustartanforderung erzeugt wird, einem vorgegebenen Wert oder weniger entspricht, die automatische Start-Steuereinrichtung eine synchrone Einspritzung in einen Zylinder durchführt, der in einem Ansaugtakt von der ersten Kraftstoffeinspritzung aus der nächste ist, ohne die asynchrone Einspritzung in den Zylinder während eines Ansaugtakts durchzuführen.

5. Automatische Start- und Stopp-Steuervorrichtung einer Verbrennungskraftmaschine nach einem der Ansprüche 1 oder 2, wobei, wenn eine Kühlwassertemperatur, wenn die Neustartanforderung erzeugt wird, einer vorgegebenen Temperatur entspricht oder geringer ist, die automatische Start-Steuereinrichtung die Verbrennungskraftmaschine mithilfe eines Starters oder eines Motors, der auch als ein Starter dient, neu startet, ohne die autonome Rückkehrsteuerung durchzuführen.

## Revendications

1. Dispositif de commande d'arrêt et de démarrage automatique d'un moteur à combustion interne, qui est pourvu de moyens de commande d'arrêt automatique pour stopper l'injection de carburant quand une demande d'arrêt automatique a été générée pendant le fonctionnement d'un moteur à combustion interne d'un type à injection dans l'orifice d'admission et de moyens de commande de démarrage automatique pour réaliser une commande de retour autonome où le retour à une injection synchrone est réalisé après qu'au moins la première injection de carburant est immédiatement réalisée avec une injection asynchrone pour redémarrer le moteur à combustion interne quand une demande de redémarrage a été générée pendant une période où la vitesse de rotation du moteur à combustion interne tombe dans une région de vitesse de rotation où le redémarrage réalisé par seulement l'injection de carburant est possible pendant l'arrêt d'injection de carburant réalisé par les moyens de commande de d'arrêt automatique,
**caractérisé en ce que**
les moyens de commande de démarrage automatique réalisent immédiatement au moins la première injection de carburant vers un cylindre qui est pendant une course d'admission avec l'injection asynchrone quand la demande de redémarrage a été générée.

2. Dispositif de commande d'arrêt et de démarrage d'un moteur à combustion interne selon la revendication 1, dans lequel les moyens de commande de démarrage automatique changent une quantité d'injection de l'injection asynchrone en fonction d'un angle de vilebrequin quand la demande de redémarrage a été générée.

3. Dispositif de commande d'arrêt et de démarrage d'un moteur à combustion interne selon l'une quelconque des revendications 1 ou 2, dans lequel les moyens de commande de démarrage automatique règlent une quantité d'injection de l'injection asynchrone en fonction d'au moins l'une d'une pression de tuyau d'admission, d'une quantité d'air d'admission d'une vitesse de rotation de moteur à combustion interne, et d'une température d'eau de refroidissement quand la demande de redémarrage a été générée.

4. Dispositif de commande d'arrêt et de démarrage d'un moteur à combustion interne selon l'une quelconque des revendications 1 ou 2, dans lequel quand une période restante d'une course d'admission d'un cylindre pendant la course d'admission quand la demande de redémarrage a été générée est une valeur prédéterminée ou inférieure, les moyens de commande de démarrage automatique réalisent l'injection synchrone dans un cylindre qui est ensuite placé dans une course d'admission depuis la première injection de carburant sans réaliser l'injection asynchrone dans le cylindre pendant une course d'admission.

5. Dispositif de commande d'arrêt et de démarrage d'un moteur à combustion interne selon l'une quelconque des revendications 1 ou 2, dans lequel quand une température d'eau de refroidissement quand la demande de redémarrage a été générée est une température prédéterminée ou inférieure, les moyens de commande de démarrage automatique redémarrent le moteur à combustion interne en utilisant un démarreur ou un moteur qui sert aussi de démarreur sans réaliser la commande de retour autonome.
